# EUROPEAN PATENT SPECIFICATION

(11) **EP 0 274 669 B1**
(45) Date of publication and mention of the grant of the patent: **18.11.1993**
(21) Application number: 87118180.6
(22) Date of filing: 08.12.1987
(51) Int. Cl.: A01G 5/04, A47G 7/02, F16B 25/04

(54) **Connecting means for frangible and/or friable articles**
Verbindungsvorrichtungen für zerbrechliche und/oder zerreibbare Gegenstände
Dispositifs d'assemblage pour des objets fragiles et/ou friables

(30) Priority: 12.12.1986 GB 8629788
(43) Date of publication of application: 20.07.1988
(73) Proprietor: JAMES NAYLOR LIMITED, Redditch Worcestershire (GB)
(72) Inventor: James, Barry David, Sambourne Warwickshire (GB); James, Herbert William, Sambourne Warwickshire (GB)
(74) Representative: Symes, Christopher A.

(56) References cited:
- EP-A- 0 034 545
- CA-A- 1 111 402
- DE-U- 8 617 075
- FR-A- 2 216 843
- FR-A- 2 304 309
- GB-A- 691 793
- GB-A- 1 151 128
- US-A- 3 041 694
- US-A- 4 157 674

## Description

The present invention relates to a new or improved method of and means for connecting frangible and/or friable and is primarily, but not exclusively, concerned with the connecting of plastics foam.

Various types of plastics foam, such as polyurethane or hydrophillic rigid plastics foam, are used for floral arrangements whereby the relatively rigid structure of the foam and in the case of hydrophillic foam its water retaining properties are utilised to support and feed the cut stems of plants. Such foam will hereinafter be referred to for the sake of clarity as floral foam. Examples of hydrophillic rigid plastics floral foam are those sold under the Trade Marks "OASIS" and "STYROFOAM".

The floral foam may be cut into a variety of basic shapes and forms, e.g. rings, hearts, crosses, pads etc., on which flowers may subsequently be mounted.

Such shapes are often given a base part or container in which the floral foam may sit so as to protect the relatively fragile foam.

It is sometimes desired to elaborate on the basic shapes of floral foam commercially available by adding further pieces of floral foam thereto.

German Gebrauchsmuster DE-U-8617075.9 discloses apparatus for holding flowers comprising a base having barbed projections on which is secured a piece of floral foam, the flowers are then attached to the floral foam by sticking the stems into the floral foam.

U.K. patent specification GB-A-1151128 discloses a holder having a handle part to which is attached a cage, the cage contains floral foam and the flowers are secured to the floral foam by passing the stems through the holes in the cage and into the floral foam.

Because of the frangible and friable nature of the floral foam, the attachment of one piece of foam to another causes great difficulty and the generally accepted practice at present is to use an adhesive when the foam is dry.

Unfortunately, even after gluing the two pieces of floral foam together, if it suffers a slight knock it is likely to cause them to once again separate. Whereas a comparatively good bond can be obtained with adhesive. because of the friable nature of the floral foam, a break will occur just beyond the boundaries of adhesive penetration.

It is also known to use, in conjunction with adhesive, pins for pinning the two pieces of floral foam together. However, unless the floral foam and flowers are very carefully treated, such pins tend to work loose.

It is an object of the present invention to provide a new and improved means for attaching an object to a frangible or friable article.

According to one aspect of the present invention, we provide a connector adapted to connect together two frangible and/or friable articles, characterised in that said connector comprises a cage like member capable of receiving one of said frangible and/or friable articles and having secured thereto a connecting part extending from said cage like member, said connecting part being of substantially helical form having an end portion remote from said cage like member, said end portion being adapted for insertion into the other frangible and/or friable article.

Preferably said connecting part comprises a spring-like member which has a substantially constant diameter and constant pitch.

Preferably said connecting part is made from a resilient metallic material and conveniently may be made from spring steel. Alternatively, said connecting member may be made from a plastics material.

Preferably, said article comprises floral foam adapted for supporting floral arrangements. Said article may comprise straw or other frangible material adapted to support a floral arrangement.

Said connector may be provided with flange-like means so as to form a stop member and define a plane beyond which said member should not be inserted into said frangible or friable article.

Preferably the diameter of helix defined by the connecting part is very much larger than the cross-sectional area of the material of the part defining the helical path.

The connecting part may have a central core having a helical thread form depending therefrom having a cross-sectional ribbon-like configuration so as to present a maximum surface contact with said frangible and/or friable article whilst causing minimum disturbance and destruction of the body of the frangible and/or friable article.

According to a second aspect of the invention, we provide a method of attaching together two frangible and/or friable articles, said method being characterised in the steps of:-
(a) attaching to or otherwise providing a cage like member with a connecting part of substantially helical form;
(b) securing one of said frangible and/or friable articles in said cage like member;
(c) inserting an end of said connecting part into said other frangible and/or friable article and causing relative rotation between the helical connecting part and said other frangible and/or friable article to cause said connecting part to be inserted into and be in threaded engagement with said other frangible and/or friable article;
(d) continuing with said relative rotation between said connecting part and said other frangible and/or friable article until both said frangible and/or friable articles are firmly secured together.

The connecting means and method, the subject of the present invention, provides a highly suitable means and method for attaching pieces of floral foam to each other and obviates the need for other mechanical connections or adhesive bonding.

The provision of a spring-like member of large diameter ensures that the volume of the frangible and/or friable article providing an anchor or support for the connecting member is large and the relatively small cross-sectional area of the material used to provide the connecting member ensures minimum disturbance and destruction of the material of the frangible and/or friable article itself.

By providing a helical member of substantially constant diameter and of substantially the same pitch, insertion of the connecting member into the frangible or friable article causes a single continuous path to be formed in said floral foam but causes no other destruction, ripping or tearing of the foam itself.

Furthermore, when frangible or friable articles are connected to each other, relative rotation between the articles and connecting member occurs until the articles come into abutment with each other or to abutment with a limit member secured to the connecting member, further rotation causing a slight stretching of the resilient connecting member so as to provide a force pulling the two frangible articles together.

The connecting means of the present invention provides further substantial advantages in its application to floral foam.

If it is desired to connect together two pieces of floral foam then the positioning of one piece relative to the other may be critical and if secured as in the past with adhesive it cannot be changed unless the bond is broken.

The connecting means of the present invention permits the two pieces of foam to be completely separated and repositioned and furthermore also allows for relative repositioning since if the connecting means is of a resilient nature, further rotation is possible relative to one of the articles causing realignment of the two pieces of foam due to resilient deformation of the spring.

The invention will now be described in more detail by way of example only with reference to the accompanying drawings, wherein:-
FIGURE 1 is an illustration of one embodiment of connector;
FIGURE 2 is an illustration of the embodiment shown in Figure 1 connected to a piece of floral foam;
FIGURE 3 is an illustration of an alternative connecting part of the connector shown in Figure 1.

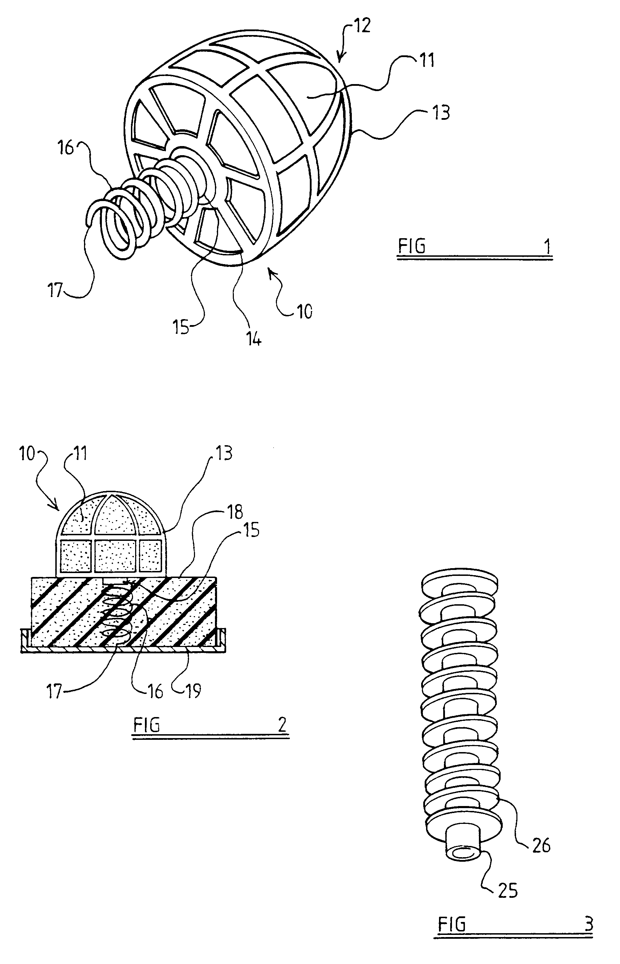

Referring first to Figure 1, a connector 10 is shown, the embodiment of connector 10 being utilised to connect a piece of floral foam 11 to a larger piece of floral foam which is shown in Figure 2.

The connector 10 comprises a first part 12 in the form of a cage-like construction. The cage-like construction 12 having a top part 13 which is detachably mounted on a base part 14. Separation of the top part 13 from the base 14 allows the cage 12 to be opened and the piece of floral foam 11 may be inserted therein. The cage 12 may then be closed to trap the piece of floral foam inside.

The base 14 of the cage 12 comprises a spigot 15 to which is secured a connecting part 16 of the connector. The connecting part 16 comprises a generally helical spring-like member which may be secured into a frangible or friable article, for example a piece of floral foam, by inserting the end 17 into the floral foam and rotating the whole of the connector 10 about the axis of the helical spring-like member 16.

Preferably the spigot 15 is hollow which enables the stem of a flower, for example, to pass through the floral foam inside the cage 12 and into the floral foam to which the connector 10 is connected.

The helical spring 16 is preferably connected to the spigot 15 in a manner whereby undesired rotation between the two is prevented and the spigot 15 or base 14 of the cage 12 may be provided with a groove into which a coil or part of a coil of the spring locates, said groove being provided with a projection or other abutment surface adapted to contact the end of the spring to prevent rotation, at least in one direction.

Further means may be provided to secure the spring 16 onto the spigot 15 and, for example, a hollow plug may be inserted in the internal bore of the spigot 15, the plug being of a tapered nature to expand the spigot 15 and so increase the force acting between the spring 16 and the spigot 15 to hold the two parts together.

Whereas the connecting part has been shown in the form of a helical spring 16, it may comprise for example a connecting member as shown in Figure 3 or any other connecting member, at least a part of which defines a generally helical path.

Referring now to Figure 2, the connector 10 shown in Figure 1 is illustrated connected to another frangible or friable article in the form of a piece of floral foam.

A piece of floral foam 18 is provided with a substantially rigid support tray 19. The connector 10 is secured to the floral foam 18 by inserting the end 17 of helical spring 16 into the foam 18 and the whole cage is rotated about the axis of helical spring 16 so that the whole of the spring 16 is inserted into the piece of foam 18 thereby firmly securing the connector and entrapped foam 11 to the piece of floral foam 18 thereby securely connecting the two pieces of foam 11 and 18 to each other.

Referring now to Figure 3, an alternative connecting part is shown. The connecting part 20 comprises a central core 25 which is hollow from which depends a helical thread form 26, the diameter of the helix being substantially constant and the pitch of the helix also being substantially constant so as not to cause undue disturbance to the material of the floral foam.

The connecting member 20 may be made from any suitable material and may, for example, comprise an injection moulding in plastics material and presents considerable surface area contact with a piece of foam while having a helical thread form 26 of ribbon-like cross-section so as to cause maximum surface contact with the foam with minimum disturbance of the material of the foam.

It will be appreciated that the embodiment shown is merely an example of the connecting means of the present invention.

It has been found preferable that the diameter of the helical thread form is substantially constant and indeed the pitch is also constant so as to cause minimum disturbance to the material of the floral foam.

It is envisaged however that non-constant diameter helixes may also be quite satisfactory and furthermore, particularly where the connecting means is of a resilient nature, it may not be necessary for the pitch of the helix to be constant since some resilient deformation of the helix may occur during insertion into the foam and so cause the helical thread form to follow its initial path into the foam, thus avoiding unnecessary damage to the body of the foam.

## Claims

1. A connector (10) adapted to connect together two frangible and/or friable articles (11,18), comprising a cage like member (12) capable of receiving one of said frangible and/or friable articles and having secured thereto a connecting part (16,20) extending from said cage like member (12), said connecting part (16,20) being of substantially helical form having an end portion (17) remote from said cage like member (12), said end portion being adapted for insertion into the other frangible and/or friable article (18).

2. A connector according to Claim 1 characterised in that said connecting part comprises a spring like member (16).

3. A connector according to Claim 1 characterised in that said connecting part (20) comprising a central core (25) having a helical thread form (26) dependent therefrom, the cross-sectional configuration of said thread form being of ribbon like configuration so as to present maximum surface contact with said other frangible and/or friable article (18) thus causing minimum distortion and destruction of the body of the other frangible and/or friable article (18).

4. A connector according to any one of the preceding claims characterised in that said one frangible and/or friable article comprises a piece of floral foam (11).

5. A connector according to any one of the preceding claims characterised in that said second frangible and/or friable article comprises a piece of floral foam (18).

6. A method of attaching together two frangible and/or friable articles, said method being characterised in the steps of:-
(a) attaching to or otherwise providing a cage like member (12) with a connecting part (16,20) of substantially helical form;
(b) securing one of said frangible and/or friable articles (11) in said cage like member (12);
(c) inserting an end (17) of said connecting part (16) into said other frangible and/or friable article (18) and causing relative rotation between the helical connecting part (16,20) and said other frangible and/or friable article (18) to cause said connecting part (16,20) to be inserted into and be in threaded engagement with said other frangible and/or friable article (18);
(d) continuing with said relative rotation between said connecting part (16,20) and said other frangible and/or friable article (18) until both said frangible and/or friable articles (11,18) are firmly secured together.

7. A method according to Claim 6 characterised in that said frangible and/or friable articles are floral foam (11,18).

## Patentansprüche

1. Verbinder (10) zum Verbinden von zwei zerbrechlichen und/oder zerreibbaren Gegenständen (11, 18) miteinander, mit einem käfigartigen Teil (12), das eines der besagten zerbrechlichen und/oder zerreibbaren Gegenstände aufnehmen kann und ein daran befestigtes Verbindungsteil (16, 20) aufweist, das sich von dem besagten käfigartigen Teil (12) erstreckt, wobei das besagte Verbindungsteil (16, 20) im wesentlichen spiralförmig ist und einen von dem besagten käfigartigen Teil (12) entfernten Endabschnitt (17) hat, der zum Einfügen in den anderen zerbrechlichen und/oder zerreibbaren Gegenstand (18) bestimmt ist.

2. Verbinder nach Anspruch 1, dadurch gekennzeichnet, daß das besagte Verbindungsteil aus einem federartigen Teil (16) besteht.

3. Verbinder nach Anspruch 1, dadurch gekennzeichnet, daß das besagte Verbindungsteil (20) einen zentralen Kern (25) aufweist, von dem eine Spiralgewindeform (26) ausgeht, wobei die Querschnittsgestaltung der besagten Gewindeform streifenartig ist, so daß ein maximaler Oberflächenkontakt mit dem besagten anderen zerbrechlichen und/oder zerreibbaren Gegenstand (18) vorliegt, wodurch eine minimale Verformung und Zerstörung des anderen zerbrechlichen und/oder zerreibbaren Gegenstandskörpers (18) verursacht wird.

4. Verbinder nach einem der vorangehenden Ansprüche, dadurch gekennzeichnet, daß der eine zerbrechliche und/oder zerreibbare Gegenstand aus einem Stück Floralschaum (11) besteht.

5. Verbinder nach einem der vorangehenden Ansprüche, dadurch gekennzeichnet, daß der besagte zweite zerbrechliche und/oder zerreibbare Gegenstand aus einem Stück Floralschaum (18) besteht.

6. Verfahren zum Befestigen von zwei zerbrechlichen und/oder zerreibbaren Gegenständen aneinander, umfassend folgende Schritte:
(a) Befestigen eines Verbindungsteils (16, 20) von im wesentlichen spiraliger Form an einem käfigartigen Teil (12) oder Versehen des käfigartigen Teils damit auf sonstige Weise;
(b) Befestigen eines der besagten zerbrechlichen und/oder zerreibbaren Gegenstände (11) in dem besagten käfigartigen Teil (12);
(c) Einfügen eines Endes (17) des besagten Verbindungsteiles (16) in den anderen zerbrechlichen und/oder zerreibbaren Gegenstand (18) und Bewirken einer relativen Drehung zwischen dem spiralförmigen Verbindungsteil (16, 20) und dem anderen zerbrechlichen und/oder zerreibbaren Gegenstand (18) um das Verbindungsteil (16, 20) dazu zu veranlassen, in den anderen zerbrechlichen und/oder zerreibbaren Gegenstand (18) eingefügt zu werden und damit im Gewindeeingriff zu stehen;
(d) Fortsetzen der besagten relativen Drehung zwischen dem besagten Verbindungsteil (16, 20) und dem besagten anderen zerbrechlichen und/oder zerreibbaren Gegenstand (18), bis die beiden besagten zerbrechlichen und/oder zerreibbaren Gegenstände (11, 18) sicher aneinander befestigt sind.

7. Verfahren nach Anspruch 6, dadurch gekennzeichnet, daß die besagten zerbrechlichen und/oder zerreibbaren Gegenstände aus Floralschaum (11, 18) bestehen.

## Revendications

1. Dispositif d'assemblage (10) apte à raccorder ensemble deux objets fragiles et/ou friables (11, 18) comprenant un élément en forme de cage (12) pouvant recevoir l'un de ces objets fragiles et/ou friables et sur lequel est fixée une partie de raccordement (16, 20) s'étendant à partir de l'élément en forme de cage (12) cette partie de raccordement (16, 20) étant sensiblement de forme hélicoïdale avec une portion d'extrémité (17) éloignée de l'élément en forme de cage (12), cette portion d'extrémité pouvant être insérée dans l'autre objet fragile et/ou friable (18).

2. Dispositif d'assemblage selon la revendication 1, caractérisé en ce que la partie de raccordement comprend un élément en forme de ressort (16).

3. Dispositif d'assemblage selon la revendication 1, caractérisé en ce que la partie de raccordement (20) comprenant un noyau central (25) avec une forme de filetage hélicoïdale (26) dépendant de celle-ci, la configuration de la forme de filet étant du type configuration en ruban de façon à présenter une surface de contact maximum avec l'autre objet fragile et/ou friable (18), n'occasionnant ainsi qu'une déformation et détérioration minimales du corps de l'autre objet fragile et/ou friable (18).

4. Dispositif d'assemblage selon l'une quelconque des revendications précédentes, caractérisé en ce que ledit objet fragile et/ou friable est constitué par un élément en mousse florale (11).

5. Dispositif d'assemblage selon l'une quelconque des revendications précédentes, caractérisé en ce que le second objet fragile et/ou friable est constitué d'un élément en mousse florale (18).

6. Procédé pour l'assemblage de deux objets fragiles et/ou friables, ce procédé étant caractérisé par les étapes consistant à :
(a) raccorder sur ou doter d'une manière ou d'une autre un élément en forme de cage (12) d'une partie de raccordement (16, 20) de forme sensiblement hélicoïdale ;
(b) fixer l'un des objets fragiles et/ou friables (11) dans l'élément en forme de cage (12) ;
(c) introduire une extrémité (17) de la partie de raccordement (16) dans l'autre objet fragile et/ou friable (18) et provoquer la rotation relative entre la partie de raccordement hélicoïdale (16, 20) et l'autre objet fragile et/ou friable (18) pour faire en sorte que la partie de raccordement (16, 20) soit insérée et en engagement vissé avec l'autre objet fragile et/ou friable (18) ;
(d) poursuivre cette rotation relative entre l'élément de raccordement (16, 20) et l'autre objet fragile et/ou friable (18) jusqu'à ce que les objets fragiles et/ou friables (11, 18) soient solidement assujettis ensemble.

7. Procédé selon la revendication 6, caractérisé en ce que les objets fragiles et/ou friables sont constitués par de la mousse florale (11, 18).
